# EUROPÄISCHE PATENTSCHRIFT

(11) **EP 1 367 227 B1**
(45) Veröffentlichungstag und Bekanntmachung des Hinweises auf die Patenterteilung: **06.10.2004**
(21) Anmeldenummer: 02028623.3
(22) Anmeldetag: 20.12.2002
(51) Int. Cl.: F01L 1/02, F16H 7/06, F16H 7/18, F16H 7/08

(54) **Vormontierter Zugmitteltrieb mit Montagehilfe**
Pre-assemblied chain drive with mounting aid
Entraînement par chaîne pré-assemblé avec une aide pour son montage

(30) Priorität: 07.05.2002 DE 20207186 U
(43) Veröffentlichungstag der Anmeldung: 03.12.2003
(73) Patentinhaber: Joh. Winklhofer & SöhneGmbH und Co.KG, 81369 München (DE)
(72) Erfinder: Bachmair, Peter, 81371 München (DE)
(74) Vertreter: Grünecker, Kinkeldey, Stockmair & Schwanhäusser Anwaltssozietät

(56) Entgegenhaltungen:
- EP-A- 0 793 002
- EP-A- 0 823 543
- EP-A- 0 848 139
- EP-A- 0 893 588
- EP-A- 1 321 631
- GB-A- 2 347 174

## Beschreibung

Die Erfindung betrifft eine vormontierte Triebmitteleinheit mit einem Tragkörper, mit wenigstens einer Radaufnahme, in der jeweils ein Triebmittelrad aufnehmbar ist, und mit einem um die Triebmittelräder legbaren Endlostriebmittel.

Vormontierte Triebmitteleinheiten sind im Stand der Technik bekannt und werden beispielsweise für Steuerketten von Brennkraftmaschinen verwendet. Aus der DE-OS 3 909 458 ist beispielsweise ein Kettenradhalterungs- und Kettenführungselement für eine Steuerkette bekannt, bei dem bogenförmige Nuten zur losen Aufnahme der Kettenräder und der Steuerkette vorgesehen sind. Eine Nut zur Aufnahme eines Kettenrades wird dabei durch eine lösbare Platte und das Kettenradhalterungs- und Kettenführungselement gebildet. Des Weiteren zeigt eine Ausführungsform das Kettenradhalterungs- und Kettenführungselement zusammen mit einer schwenkbar gelagerten, mittels einer Druckfeder gespannten Kettenspanneinrichtung.

Eine weitere vormontierte Triebmitteleinheit ist in der US-A-4 879 977 beschrieben. Bei dieser Vorrichtung werden zwei Zahnräder von einer entsprechend ausgeformten Führungsplatte in Position gehalten. Damit die Zahnräder in entsprechenden Aussparungen in dieser Führungsplatte angeordnet werden können, darf die Kette noch nicht geschlossen sein. Die Kette wird nach dem Einlegen der Zahnräder in die entsprechenden Aussparungen um die Zahnräder herumgelegt und verschlossen.

Andere Möglichkeiten bestehen beispielsweise darin, den Tragkörper mehrteilig auszubilden, wie bei den Vorrichtungen der US-A-4 869 709 oder der EP-A-0 280 365, so dass die Triebmittelräder auch mit herumgelegtem Endlostriebmittel angeordnet werden können.

Aus der EP-A-0 848 139 ist eine vormontierte Zugmitteltriebeinheit mit einem einteiligen Tragkörper bekannt. Bei dieser vormontierten Zugmitteltriebeinheit werden die Zugmittelräder mit herumgelegtem Zugmittel für die Montage in Haltetaschen positioniert und durch ein einteilig mit einer Haltevorrichtung ausgestaltetes Rasthalteelement fixiert.

Die vorgenannten vormontierten Triebmitteleinheiten verbleiben mitsamt des Tragkörpers nach der Montage an einer Antriebseinheit, insbesondere einem Motorblock einer Brennkraftmaschine. Hauptsächlich soll durch die Ausgestaltungen der Triebmitteleinheit eine Vormontage der Triebmittelräder und des Endlostriebmittels ermöglicht werden. Bestimmte Bauelemente der Triebmitteleinheit übernehmen dabei sowohl während der Hauptmontage als auch im späteren Einsatz an der Antriebseinheit zugewiesene Funktionen. Andere Bauelemente und Funktionen treten im späteren Betrieb vollständig in den Hintergrund. Die verschiedenen Aufgaben aus der Montage und dem späteren Einsatz führen - insbesondere im Hinblick auf die Verwendung der vormontierten Triebmitteleinheit im Bereich der Automobilindustrie, die dort vorhandenen hohen Stückzahlen sowie die fortschreitende Automatisierung - zu einem ständigen Verbesserungsbedarf und einer notwendigen Anpassung an gestiegene Anforderungen.

Der vorliegenden Erfindung liegt die Aufgabe zugrunde, eine vormontierte Triebmitteleinheit der eingangs genannten Art bereitzustellen, die hinsichtlich der verschiedenen gewünschten funktionalen Anforderungen verbessert ausgeführt ist, insbesondere jedoch die Montage der Triebmitteleinheit und das Anbringen der Triebmittelräder erleichtert.

Diese Aufgabe wird erfindungsgemäß durch eine austauschbare Montagehilfe gelöst, die im Bereich der Radaufnahme anstelle eines Triebmittelrades angeordnet ist.

Diese Lösung ist einfach und erleichtert das Einfädeln eines oder mehrerer Triebmittelräder in das Endlostriebmittel. Dabei sind erfindungsgemäß eines oder mehrere der Triebmittelräder durch die Montagehilfe ersetzt. Da die Montagehilfe anstelle eines Triebmittelrades bei der vormontierten Triebmitteleinheit vorgesehen ist, wird der gesamte vormontierte Trieb durch die Montagehilfe in Position gehalten, obwohl eines oder mehrere der Triebmittelräder der vormontierten Triebmitteleinheit fehlen.
Insbesondere kann dabei gemäß einer weiteren vorteilhaften Ausgestaltung vorgesehen sein, dass die Montagehilfe gegen ein Triebmittelrad austauschbar ausgestaltet ist, so dass beim Betrieb der an der Antriebseinheit angebrachten Triebmitteleinheit keine Montagehilfe mehr vorhanden ist. Dies führt zu einem geringerem Materialverbrauch und zu geringeren Kosten. Durch die Austauschbarkeit der Montagehilfe kann vorteilhaft die Montagehilfe wiederverwendet werden. Um die Montagehilfe kostensparend ständig in den Montagekreislauf zurückführen zu können, kann deshalb vorteilhaft in einer Weiterbildung die Montagehilfe wiederholt gegen ein Triebmittelrad austauschbar ausgestaltet sein.

In einer anderen vorteilhaften Weiterbildung der Erfindung erfüllt die Montagehilfe zusätzlich die Aufgabe, eine Spannung in der Kette zu erzeugen, so dass der vormontierte Zugmitteltrieb beim Einbau leichter handzuhaben ist und nicht auseinander fällt. Hierzu kann vorgesehen sein, dass die Montagehilfe in der vormontierten Triebmitteleinheit elastisch vorgespannt und eine Spannkraft im Endlostriebmittel erzeugend eingebaut ist.

In diesem Zusammenhang kann die Montagehilfe auch so ausgestaltet sein, dass bei einer mit bereits wenigstens einem Triebmittelrad versehenen Triebmitteleinheit die Montagehilfe das wenigstens eine Triebmittelrad über das Endlostriebmittel in die dem wenigstens einem Triebmittelrad zugeordnete Radaufnahme ziehend und die vormontierte Triebmitteleinheit in Position haltend ausgestaltet ist. Diese Ausgestaltung führt ebenfalls zu einem stabileren Zusammenhalt der vormontierten Triebmitteleinheit vor dem Einbau. Es ist auch denkbar, dass sämtliche Kettenräder durch Montagehilfen ersetzt sind.

Eine Spannkraft im Endlostriebmittel kann insbesondere dadurch erzeugt werden, dass das Endlostriebmittel im Bereich der Radaufnahme durch die Montagehilfe aufgespreizt wird. Dies hat den Vorteil, dass durch die Aufspreizung gleichzeitig Platz für ein unproblematisches Einsetzen des Triebmittelrades geschaffen wird, so dass der Montagevorgang nochmals erleichtert wird. Hierzu kann insbesondere die lichte Weite der Montagehilfe in der vormontierten Triebmitteleinheit an wenigstens einer Stelle größer sein als der Durchmesser des Triebmittelrades, das anstelle der Montagehilfe montiert wird. Bei dieser Maßnahme kann das Triebmittelrad besonders einfach eingesetzt werden. Die Montagehilfe kann beispielsweise U-förmig ausgestaltet sein. Sie kann auch wenigstens zwei gegen das Endlostriebmittel elastisch drückende Schenkel aufweisen. Durch die wenigstens zwei Schenkel wird das Endlostriebmittel aufgespreizt und gleichzeitig die Zugspannung im Endlostriebmittel erzeugt. Die Schenkel können sich außerdem zwischen der Radaufnahme und dem Endlostriebmittel elastisch abstützen und das Endlostriebmittel so vom Tragkörper beabstandet führen.
Die Montagehilfe kann ferner dazu so in die vormontierte Triebmitteleinheit eingebaut sein, dass die Schenkel vom Tragkörper weggerichtet sind, was das Einsetzen des Triebmittelrades in die beispielsweise als Haltetasche ausgebildete Radaufnahme erleichtert.

Um die Montagehilfe beim Austausch gegen das der Montagehilfe zugeordnete Triebmittelrad zu erleichtern, kann die Montagehilfe mit wenigstens einer auf die Schenkel einwirkenden Handhabe versehen sein, bei deren Betätigung die Schenkel zum Ausbau der Montagehilfe zusammendrückbar und die elastische Vorspannung der Schenkel und damit die Spannkraft im Endlostriebmittel verringerbar sind.

Die Handhabe kann beispielsweise an den Schenkeln selbst angeordnet und insbesondere als ein abgebogener oder abgekanteter Endabschnitt der Schenkel ausgebildet sein. Diese Ausgestaltungen sind aus fertigungstechnischer Sicht aufgrund ihrer einfachen Herstellung günstig. Eine weitere günstige Ausführungsform sieht vor, dass die Handhabe von außerhalb der Triebmitteleinheit frei zugänglich angeordnet ist.

In einer weiteren vorteilhaften Ausgestaltung können die Schenkel durch einen im Wesentlichen elastischen, vorzugsweise gebogenen Abschnitt miteinander verbunden sein. Dieser Abschnitt kann sich beispielweise am Tragkörper abstützen, insbesondere in der Haltetasche der Radaufnahme, in der im Betrieb das der Montagehilfe zugeordnete Triebmittelrad gehalten ist. Andererseits kann dieser Abschnitt auch vom Tragkörper weggewandt sein und als Führungselement für das Endlostriebmittel dienen.

Die Montagehilfe kann einstückig als ein einziges Teil ausgestaltet sein, und beispielsweise aus Federstahl, insbesondere einem Federstahlblech, gefertigt sein.

Ferner kann vorgesehen sein, dass mindestens eine Spanneinrichtung am Tragkörper angeordnet ist, durch die zwischen zwei Triebmittelrädem bzw. zwischen den anstelle dieser Triebmittelräder vorgesehenen Montagehilfen eine Vorspannung auf das Endlostriebmittel aufgebracht ist. Die Anordnung der Spanneinrichtung am Tragkörper bietet die Möglichkeit, eine kompakte Triebmitteleinheit vorab zusammenzustellen, die in einem einzigen Montageschritt montiert werden kann. Auch kann die Spanneinrichtung zur Vorspannung des Endlostriebmittels genutzt werden, insbesondere im Zusammenwirkung mit der als Spannmittel ausgestalteten Montagehilfe, wodurch eine Sicherung der Triebmittelräder in der montierten Stellung ermöglicht wird.

Eine vorteilhafte Ausgestaltung sieht dabei vor, dass die Spanneinrichtung als eine schwenkbar am Tragkörper angeordnete Spannschiene ausgestaltet ist. Durch die schwenkbare Anordnung ist die Spannschiene einfach montierbar und verschiedene Hebelkräfte sind durch unterschiedliche Spannansatzpunkte erreichbar.

Gemäß einer weiteren günstigen Variante kann vorgesehen sein, dass die Spanneinrichtung durch eine Federeinrichtung vorgespannt ist, bei der durch unterschiedliche Ausgestaltungsmöglichkeiten für beliebige Einsatzzwecke unterschiedliche Kraftverläufe verwirklichbar sind. Die Federeinrichtung kann dabei als eine Blattfeder ausgestaltet sein, wodurch eine einfache Konstruktion der Federeinrichtung mit nur wenigen Komponenten möglich ist.

Der Tragkörper kann vorteilhaft aus einem Aluminium-Druckgussteil bestehen, wodurch eine hohe Festigkeit bei gleichzeitig günstigen Schwingungseigenschaften erreicht wird. Neben dieser bevorzugten Ausgestaltung kann der Tragkörper allerdings auch unter Kostenoptimierungsgesichtspunkten als Blech oder Aluminiumblechbiegeteil sowie als Kunststoffformteil realisiert werden.

Im Folgenden werden Ausführungsbeispiele der Erfindung mit Bezug auf die Zeichnungen beispielhaft näher erläutert.

Es zeigen:
- Fig. 1: eine Draufsicht auf eine erfindungsgemäße vormontierte Triebmitteleinheit mit einer Montagehilfe;
- Fig. 2: die Montagehilfe der Fig. 1 in einer Draufsicht;
- Fig. 3: eine Seitenansicht der Montagehilfe der Fig. 2;
- Fig. 4: ein zweites Ausführungsbeispiel einer erfindungsgemäßen vormontierten Triebmitteleinheit mit zwei Montagehilfen.

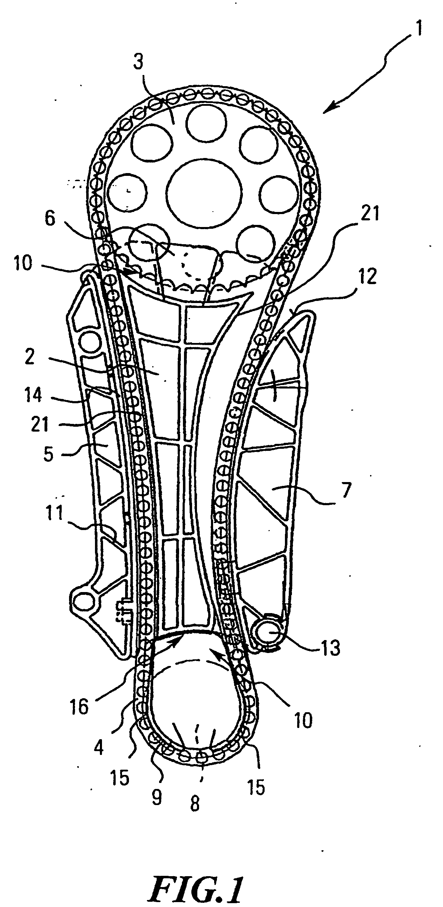

Das in Fig. 1 dargestellte Ausführungsbeispiel einer erfindungsgemäßen vormontierten Triebmitteleinheit 1 ist als Steuertrieb an einer Brennkraftmaschine vorgesehen.

Die vormontierte Triebmitteleinheit 1 umfasst einen im Wesentlichen plattenförmigen Tragkörper 2, ein Nockenwellenkettenrad 3, ein als Antriebskette 4 ausgebildetes Endlostriebmittel, eine am Tragkörper 2 befestigte Führungsschiene 5, eine Radaufnahme 6 für das Nockenwellenkettenrad 3 sowie eine Aufnahme und Verrasterung für eine Spannschiene 7. Des Weiteren ist an der vormontierten Triebmitteleinheit 1 anstelle des Kurbelwellenkettenrades 8 (gestrichelte Linie) eine Montagehilfe 9 in der entsprechenden Radaufnahme 10 vorgesehen.

Die Radaufnahmen 6, 10 können als Haltetaschen ausgebildet sein, die durch mit dem Tragkörper 2 verbundene oder vom Tragkörper 2 ausgebildete, radial sichernde Seitenwände sowie durch axiale Sicherungselemente gebildet sind. Zur Erhöhung der Festigkeit sind sowohl an der Führungsschiene 5, als auch an der Spannschiene 7 sowie am Tragkörper 2 Versteifungsrippen 11 ausgebildet.

Die Spannschiene 7 ist zur Spannung der Antriebskette 4 auf dem Tragkörper zwischen dem Nockenwellenkettenrad 3 und der Stelle des Kurbelwellenkettenrades 8 außerhalb des von der Antriebskette 4 umschlossenen Bereichs angebracht und mit einer bogenförmigen Andrückfläche 12 versehen.

Das zum Kurbelwellenkettenrad 8 gerichtete Ende der Spannschiene 7 ist auf einem mit dem Tragkörper 2 verbundenen Stift 13 drehbar gelagert.

Die Führungsschiene 5 ist zum Verschleißschutz auf der der Antriebskette 4 zugewandten Seite mit auswechselbaren Führungsbelägen 14 versehen, deren Enden um die Enden der Führungsschiene 5 herumgreifen.

Im Bereich des Kurbelwellenkettenrades 8 ist der Tragkörper 2 bis auf eine sichernde Seitenwand offen gestaltet. Die Montagehilfe 9 stützt sich an der Seitenwand ab und spannt die Antriebskette 4 so auf, wie dies in etwa das anstelle der Montagehilfe 9 angebrachte Kurbelwellenkettenrad täte. Durch die von der Montagehilfe 9 ausgeübte Spannkraft wird demnach das Nockenwellenkettenrad 3 in die Haltetasche 6 gezogen und in seiner Position gesichert. Außerdem wird durch die Montagehilfe 9 die von der Spannschiene 7 erzeugte Spannkraft aufgenommen und eine Gegenkraft erzeugt, so dass auch die Spannschiene 7 aufgrund der durch die Montagehilfe 9 erzeugten Spannkraft in einer stabilen, vorgespannten Montageposition gehalten wird.

Wie in Fig. 1 zu erkennen ist, ist wenigstens eine lichte Weite der Montagehilfe 9 etwa so groß, vorzugsweise jedoch größer, als der Durchmesser des Kurbelwellenkettenrades, so dass das Kurbelwellenkettenrad 8 leicht montiert werden kann.

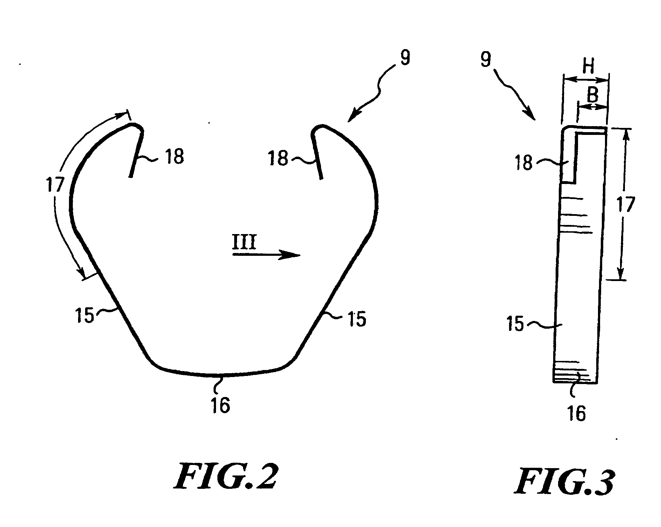

Fig. 2 zeigt die Montagehilfe der Fig. 1 in einer Draufsicht.

Wie in Fig. 2 zu erkennen ist, weist die Montagehilfe 9 eine in etwa U-förmige Form auf, wobei die beiden Schenkel 15 durch einen bogenförmigen Abschnitt 16 verbunden sind, der sich an der Seitenwand des Tragkörpers 2 der Triebmitteleinheit 1 abstützt. Die Schenkel 15 weisen jeweils einen nach außen aufgebogenen Bereich 17 auf, der in etwa an der Stelle liegt, an der das Kurbelwellenkettenrad 8 in der endmontierten Triebmitteleinheit 1 zu liegen kommt.

Der Abstand zwischen dem Verbindungsabschnitt 16 und den Enden der Schenkel 15 ist so gewählt, dass bei der Montage der vormontierten Triebmitteleinheit 1 an der Antriebseinheit, beispielsweise einem Verbrennungskraftmotor, die Kette im Wesentlichen so geführt wird, als ob das Kurbelwellenkettenrad 8 anstelle der Montagehilfe 9 angebracht ist. Insbesondere wird durch die Montagehilfe 9 der in der endmontierten Triebmitteleinheit 1 vorgesehene Abstand zwischen dem Nockenwellenkettenrad 3 und dem Kurbelwellenkettenrad 8 in der Führung des Endlostriebmittels berücksichtigt. Auf diese Weise kann die vormontierte Triebmitteleinheit bereits in ihrer Endmontage-Stellung an der Antriebseinheit angebracht werden, obwohl nicht alle Triebmittelräder montiert sind.

Die Montagehilfe 9 ist ferner mit einer Handhabe 18 versehen, bei deren Betätigung die Schenkel 15 zusammendrückbar sind. Beim Ausführungsbeispiel der Fig. 2 ist die Handhabe 18 als ein umgebogener Bereich am Ende eines jeden Schenkels 15 ausgebildet, der sich von der Antriebskette 4 weg (vgl. Fig. 1) in den von der Montagehilfe 9 aufgespannten Bereich erstreckt. In diesem Bereich ist die Handhabe 18 für eine leichte Montage frei zugänglich und die Montagehilfe 9 einfach und ohne komplizierte Handgriffe durch das Kurbelwellenkettenrad 8 austauschbar. Als Handhabe 18 können auch separate Bauelemente, beispielsweise Griffe oder Griffabschnitte, dienen, die nachträglich an der Montagehilfe 9 befestigt werden.

Die Montagehilfe 9 ist aus einem elastischen Material gefertigt, so dass die Schenkel 15 auch bei mehrmaliger Wiederverwendung der Handhabe ihre Elastizität bewahren. Insbesondere kann die Handhabe 9 aus Federstahl gefertigt sein. Die Höhe H der Montagehilfe 9 entspricht mindestens der inneren Breite B der Kette (vgl. Fig. 3).

In der Seitenansicht der Fig. 3, die die Montagehilfe in einer Ansicht entlang des Pfeiles III der Fig. 2 zeigt, ist gezeigt, dass die Handhabe 18 insbesondere über die Breite B der Kette hinausragen kann, so dass das Kurbelwellenkettenrad 8 eingesetzt werden kann, während die Montagehilfe 9 noch montiert ist. Bei eingesetztem Kettenrad kann die über die Antriebsstelle 4 ragende Montagehilfe 9 mit Hilfe der Handhabe 18 von der Triebmitteleinheit 1 abgezogen werden. Die Kette legt sich dann unter Wirkung der Spannschiene 7 an das Kurbelwellenkettenrad 8. Die herausgenommene Montagehilfe 9 kann anschließend wiederverwendet werden.

Alternativ kann die Montagehilfe 9 auch unmittelbar vor dem Einhängen des Kurbelwellenkettenrads in die Kette entfernt werden.

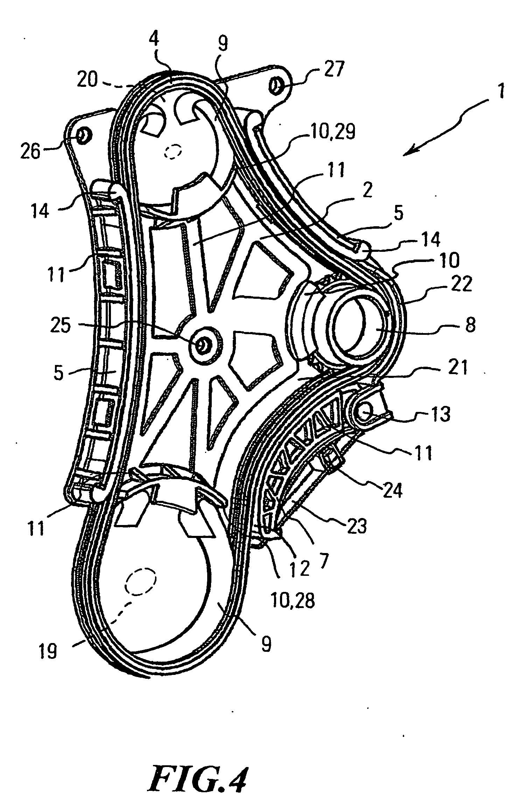

Das Ausführungsbeispiel der Fig. 4 zeigt eine vormontierte Triebmitteleinheit 1, die zum Antrieb von Aggregaten einer nicht gezeigten Brennkraftmaschine verwendet wird. Beim Ausführungsbeispiel der Fig. 4 werden für Bauelemente, die in ihrem Aufbau und/oder ihrer Funktion den Bauelementen des Ausführungsbeispiels der Fig. 1 entsprechen, dieselben Bezugszeichen wie beim Ausführungsbeispiel der Fig. 1 verwendet. Der Einfachheit halber wird bei der Beschreibung des Ausführungsbeispiels der Fig. 4 lediglich auf die Unterschiede zum Ausführungsbeispiel der Fig. 1 hingewiesen. Die unterschiedlichen Elemente und Formen der Ausführungsbeispiele der Fig. 1 und 4 können beliebig miteinander kombiniert werden.

Beim Ausführungsbeispiel der Fig. 4 ist die vormontierte Triebmitteleinheit 1 mit Aufnahmen 10 für insgesamt drei Kettenräder 8, 19, 20 versehen. Die Kettenräder 19 und 20 treiben Aggregate der Brennkraftmaschine an und werden über die Antriebskette 4 durch das Kurbelwellenkettenrad 8 angetrieben.

Die vormontierte Triebmitteleinheit 1 der Fig. 4 weist ferner zwei außenliegende, bogenförmige Führungsschienen 5 am Tragkörper 2 auf. Die Führungsschienen 5 sind zwischen den Kettenrädern 19 und 20 sowie zwischen dem Kettenrad 20 und dem Kurbelwellenkettenrad 8 angeordnet. Zur Erhöhung der Festigkeit der Führungsschienen sind sowohl an den Außenseiten als auch an den von dem Tragkörper gebildeten radial sichernden Seitenwänden 21 keilförmige Versteifungselemente (kein Bezugszeichen) ausgebildet. Der Tragkörper 2 ist durch Streben entlang der durch die Antriebskette 4 und die Kettenräder 8, 19, 20 begrenzten Innenfläche sowie durch sternförmige diese Innenfläche durchquerende Streben versteift.

Zur Spannung der Antriebskette 4 ist auf dem Tragkörper 2 zwischen dem Kurbelwellenkettenrad 8 und dem Kettenrad 4 außerhalb der Antriebskette 4 eine Spannschiene 7 mit einer bogenförmigen Andrückfläche 12 angebracht. Das zum Kurbelwellenkettenrad 8 gerichtete Ende der Spannschiene 7 ist auf einem mit dem Tragkörper 2 verbundenen Stift 13, wie beim Ausführungsbeispiel der Fig. 1, drehbar gelagert. Zur Verstärkung des Tragkörpers 2 im Bereich des Kurbelwellenkettenrades 8 ist zwischen der Führungsschiene 5 zwischen dem Kettenrad 20 und dem Kurbelwellenkettenrad 8 und dem Stift 13 eine äußere Seitenwand gebildet, die den äußeren Umfang des Kurbelwellenkettenrades 3 umschließt, und ist eine Außenseite mit keilförmigen Versteifungselementen versehen. Die zur Spannung der Antriebskette 6 notwendige Spannkraft wird durch eine Blattfeder 23 aufgebracht, die auf der der Andrückfläche 12 abgewandten Außenseite der Spannschiene 7 angreift. Die Blattfeder 23 ist mit einer Spannhülse 24 spannbar, wobei die Spannhülse 24 sich auf den fest eingespannten äußeren Teil der zweiteiligen Blattfeder 23 abstützt. Zur Endmontage der vormontierten Triebmitteleinheit sind in der Mitte des Tragkörpers 2 eine Bohrung 25 sowie zwei weitere Bohrungen 26 und 27 seitlich des Kettenrades 20 vorgesehen. Der Tragkörper 2 ist im Bereich der Kettenräder 19 und 20 offen gestaltet. In die Haltetaschen 28, 29 der Kettenräder 19, 20 ist jeweils eine erfindungsgemäße Montagehilfe 9 anstelle des jeweils zugeordneten Kettenrades 19 und 20 eingesetzt. Dabei dient der Verbindungsabschnitt 16 beispielsweise bei der dem Kettenrad 19 zugeordneten Montagehilfe 9 als Führungselement für die Antriebskette 4, während sich die Montagehilfe 9 im Bereich der Endabschnitte der Schenkel 15 am Tragkörper 2 abstützt. Die dem Kettenrad 20 zugeordnete Montagehilfe 9 ist dagegen beispielhaft in der Montagelage wie beim Ausführungsbeispiel der Fig. 1 eingebaut dargestellt.
Durch die Montagehilfe ist die Antriebskette 4 in etwa so geführt, als ob die Kettenräder 19, 20 eingesetzt sind. Die Montagehilfen 9 spannen die Kette 4 an den Radaufnahmen 10 so vor, dass die Kettenräder 19, 20 in die vormontierte Triebmitteleinheit 1 ohne großen Aufwand eingesetzt werden können. Die Montagehilfen 9 werden dabei durch das Zusammenwirken mit der von der Spannschiene 7 erzeugten Spannkraft elastisch verformt.

Die lichte Weite des von den Montagehilfen 9 aufgespannten Raumes entspricht dabei wenigstens abschnittsweise mindestens dem Durchmesser des jeweils zugeordneten Kettenrades 19, 20.

Wie beim Ausführungsbeispiel der Fig. 1 werden die Montagehilfen 9 kurz nach dem Einhängen der Kettenräder 19, 20 entfernt und anschließend wiederverwendet.

## Patentansprüche

1. Vormontierte Triebmitteleinheit (1) mit einem Tragkörper (2), mit wenigstens einer Radaufnahme (6, 10, 28, 29), in der jeweils eine Triebmittelrad (3, 8, 19, 20) aufnehmbar ist, und mit einem um die Triebmittelräder (3, 8, 19, 20) legbaren Endlostriebmittel (4), **gekennzeichnet durch** eine austauschbare Montagehilfe (9), die in der oder im Bereich der Radaufnahme (6, 10, 28, 29) anstelle eines Triebmittelrades (3, 8, 19, 20) angeordnet ist.

2. Vormontierte Triebmitteleinheit (1) nach Anspruch 1, **dadurch gekennzeichnet, dass** die Montagehilfe (9) gegen ein Triebmittelrad (3, 8, 19, 20) austauschbar ausgestaltet ist.

3. Vormontierte Triebmitteleinheit (1) nach Anspruch 1 oder 2, **dadurch gekennzeichnet, dass** die Montagehilfe (9) in der Radaufnahme (6, 10, 28, 29) elastisch vorgespannt und eine Spannkraft im Endlostreibmittel (4) erzeugend eingebaut ist.

4. Vormontierte Triebmitteleinheit (1) nach einem der oben genannten Ansprüche, **dadurch gekennzeichnet, dass** die Montagehilfe (9) das Endlostriebmittel (4) im Bereich der Radaufnahme (6, 10, 28, 29) aufspreizend ausgestaltet ist.

5. Vormontierte Triebmitteleinheit (1) nach einem der oben genannten Ansprüche, **dadurch gekennzeichnet, dass** die Montagehilfe (9) wiederholt gegen ein Triebmittelrad (3, 8, 19, 20) austauschbar ausgestaltet ist.

6. Vormontierte Triebmitteleinheit (1) nach einem der oben genannten Ansprüche, **dadurch gekennzeichnet, dass** die Triebmitteleinheit (1) mit wenigstens einem Triebmittelrad (3, 8, 19, 20) versehen ist, und dass die Montagehilfe (9) das Triebmittelrad (3, 8, 19, 20) über das Endlostriebmittel (4) in die Radaufnahme (6, 10, 28, 29) ziehend und in Position haltend ausgestaltet ist.

7. Vormontierte Triebmitteleinheit (1) nach einem der oben genannten Ansprüche, **dadurch gekennzeichnet, dass** die Montagehilfe (9) mit zwei elastisch gegen das Endlostriebmittel (4) drückenden Schenkeln (15) ausgebildet ist.

8. Vormontierte Triebmitteleinheit (1) nach Anspruch 7, **dadurch gekennzeichnet, dass** die Schenkel (15) vom Tragkörper (2) weggerichtet sind.

9. Vormontierte Triebmitteleinheit (1) nach Anspruch 7 oder 8, **dadurch gekennzeichnet, dass** die Montagehilfe (9) mit wenigstens einer, auf die Schenkel (15) einwirkenden Handhabe (18) versehen ist, bei deren Betätigung die Schenkel (15) zum Ausbau der Montagehilfe (9) zusammendrückbar sind.

10. Vormontierte Triebmitteleinheit (1) nach Anspruch 9, **dadurch gekennzeichnet, dass** die Handhabe (18) von außerhalb der Triebmitteleinheit (1) frei zugänglich angeordnet ist.

11. Vormontierte Triebmitteleinheit (1) nach Anspruch 9 oder 10, **dadurch gekennzeichnet, dass** die Handhabe (18) an den Schenkeln (15) angeordnet ist.

12. Vormontierte Triebmitteleinheit (1) nach Anspruch 11, **dadurch gekennzeichnet, dass** die Handhabe (18) als ein abgebogener oder abgekanteter Endabschnitt der Schenkeln (15) ausgebildet ist.

13. Vormontierte Triebmitteleinheit (1) nach einem der Ansprüche 7 bis 12, **dadurch gekennzeichnet, dass** die Schenkel (15) durch einen im Wesentlichen elastischen, vorzugsweise gebogenen, Verbindungsabschnitt (16) miteinander verbunden sind.

14. Vormontierte Triebmitteleinheit (1) nach Anspruch 13, **dadurch gekennzeichnet, dass** sich eine Montagehilfe 9 im Bereich des Verbindungsabschnittes (16) am Tragkörper (2) abstützt.

15. Vormontierte Triebmitteleinheit (1) nach einem der oben genannten Ansprüche, **dadurch gekennzeichnet, dass** die lichte Weite (W) der Montagehilfe (9) an wenigstens einer Stelle wenigstens dem Durchmesser des gegen das Spann-mittel austauschbaren Triebmittelrades (3, 8, 19, 20) entspricht.

16. Vormontierte Triebmitteleinheit (1) nach einem der oben genannten Ansprüche, **dadurch gekennzeichnet, dass** die Montagehilfe (9) einstückig vorzugsweise aus Bandmaterial gefertigt ist.

17. Vormontierte Triebmitteleinheit (1) nach einem der oben genannten Ansprüche, **dadurch gekennzeichnet, dass** die Montagehilfe (9) aus Federstahl gefertigt ist.

18. Vormontierte Triebmitteleinheit (1) nach einem der oben genannten Ansprüche, **dadurch gekennzeichnet, dass** die Montagehilfe (9) eine Breite (H) aufweist, die mindestens der inneren Breite (B) des Endlostreibelements (4) entspricht.

19. Vormontierte Triebmitteleinheit (1) nach einem der oben genannten Ansprüche, **dadurch gekennzeichnet, dass** zwischen mindestens zwei Triebmittelrädem (3, 8, 19, 20) eine Führungsschiene (5) zur Führung des Endlostriebmittels (4) angeordnet ist.

20. Vormontierte Triebmitteleinheit (1) nach einem der oben genannten Ansprüche, **dadurch gekennzeichnet, dass** mindestens eine Spanneinrichtung (7, 13, 24) am Tragkörper angeordnet ist, durch die zwischen zwei Triebmittelräder (3, 8, 19, 20) eine Vorspannung auf das Endlostriebmittel (4) aufgebracht ist.

21. Vormontierte Triebmitteleinheit nach Anspruch 20, **dadurch gekennzeichnet, dass** die Spanneinrichtung eine schwenkbar am Tragkörper (2) angeordnete Spannschiene (7) aufweist.

22. Vormontierte Triebmitteleinheit (1) nach Anspruch 20 oder 21, **dadurch gekennzeichnet, dass** die Spanneinrichtung durch eine Federeinrichtung (23, 24) vorgespannt ist.

## Claims

1. A preassembled drive means unit (1) provided with a support body (2) comprising at least one wheel reception means (6, 10, 28, 29), which is adapted to receive therein a respective drive means wheel (3, 8, 19, 20), and an endless drive means (4) which is adapted to be put around said drive means wheels (3, 8, 19, 20), **characterized by** a replaceable mounting aid (9) which is arranged in the, or in the area of the wheel reception means (6, 10, 28, 29) instead of a drive means wheel (3, 8, 19, 20).

2. A preassembled drive means unit (1) according to claim 1, **characterized in that** the mounting aid (9) is designed such that it is replaceable by a drive means wheel (3, 8, 19, 20).

3. A preassembled drive means unit according to claim 1 or 2, **characterized in that** the mounting aid (9) is installed such that it is elastically pretensioned in the wheel reception means (6, 10, 28, 29) and such that it produces a tensioning force in the endless drive means (4).

4. A preassembled drive means unit (1) according to one of the above-mentioned claims, **characterized in that** the mounting aid (9) is designed such that it spreads the endless drive means (4) in the area of the wheel reception means (6, 10, 28, 29).

5. A preassembled drive means unit (1) according to one of the above-mentioned claims, **characterized in that** the mounting aid (9) is designed such that it is adapted to be repeatedly replaced by a drive means wheel (3, 8, 19, 20).

6. A preassembled drive means unit (1) according to one of the above-mentioned claims, **characterized in that** the drive means unit (1) is provided with at least one drive means wheel (3, 8, 19, 20), and that the mounting aid (9) is designed such that it pulls the drive means wheel (3, 8, 19, 20) via the endless drive means (4) into the wheel reception means (6, 10, 28, 29) and secures said drive means wheel (3, 8, 19, 20) in position.

7. A preassembled drive means unit (1) according to one of the above-mentioned claims, **characterized in that** the mounting aid (9) is designed such that it comprises two legs (15) which are elastically pressed against the endless drive means (4).

8. A preassembled drive means unit (1) according to claim 7, **characterized in that** the legs (15) are directed away from the support body (2).

9. A preassembled drive means unit (1) according to claim 7 or 8, **characterized in that** the mounting aid (9) is provided with at least one handle (18) which acts on the legs (15) and which, when actuated, can be used for pressing said legs (15) together so as to remove the mounting aid (9).

10. A preassembled drive means unit (1) according to claim 9, **characterized in that** the handle (18) is arranged such that it is freely accessible from a location outside of the drive means unit (1).

11. A preassembled drive means unit (1) according to claim 9 or 10, **characterized in that** the handle (18) is arranged on the legs (15).

12. A preassembled drive means unit (1) according to claim 11, **characterized in that** the handle (18) is implemented as a bent or folded end section of the legs (15).

13. A preassembled drive means unit (1) according to one of the claims 7 to 12, **characterized in that** the legs (15) are interconnected by an essentially elastic, preferably arcuate connecting portion (16).

14. A preassembled drive means unit (1) according to claim 13, **characterized in that** one of the mounting aids (9) rests on the support body (2) in the area of said connecting portion (16).

15. A preassembled drive means unit (1) according to one of the above-mentioned claims, **characterized in that** the inside width (W) of the mounting aid (9) corresponds, at least at one point, to at least the diameter of the drive means wheel (3, 8, 19, 20) which is adapted to be replaced by the tensioning means.

16. A preassembled drive means unit (1) according to one of the above-mentioned claims, **characterized in that** the mounting aid (9) is produced as integral component, preferably from strip material.

17. A preassembled drive means unit (1) according to one of the above-mentioned claims, **characterized in that** the mounting aid (9) is produced from spring steel.

18. A preassembled drive means unit (1) according to one of the above-mentioned claims, **characterized in that** the mounting aid (9) has a width (H) which corresponds to at least the inner width (B) of the endless drive means (4).

19. A preassembled drive means unit (1) according to one of the above-mentioned claims, **characterized in that** a guide rail (5) for guiding the endless drive means (4) is arranged between at least two drive means wheels (3, 8, 19, 20).

20. A preassembled drive means unit (1) according to one of the above-mentioned claims, **characterized in that** at least one tensioning means (7, 13, 24) is arranged on the support body, said tensioning means applying a pretension to the endless drive means (4) between two drive means wheels (3, 8, 19, 20).

21. A preassembled drive means unit (1) according to claim 20, **characterized in that** the tensioning means comprises a tensioning rail (7) which is pivotably arranged on the support body (2).

22. A preassembled drive means unit (1) according to claim 20 or 21, **characterized in that** the tensioning means is pretensioned by a spring means (23, 24).

## Revendications

1. Ensemble d'entraînement pré-assemblé (1) comprenant un corps de support (2) ayant au moins un logement de roue (6, 10, 28, 29) dans lequel peut être logé respectivement au moins une roue d'entraînement (3, 8, 19, 20), et comprenant un moyen de transmission sans fin (4) pouvant être enroulé autour des roues d'entraînement (3, 8, 19, 20),
**caractérisé par** un dispositif d'aide au montage remplaçable (9) qui est mis en place dans le, ou au niveau du, logement de roue (6, 10, 28, 29) en lieu et place d'une roue d'entraînement du (3, 8, 19, 20).

2. Ensemble d'entraînement pré-assemblé (1) selon la revendication 1, **caractérisé en ce que** le dispositif d'aide au montage (9) est configuré de manière à être interchangeable avec une roue d'entraînement (3, 8, 19, 20).

3. Ensemble d'entraînement pré-assemblé (1) selon la revendication 1 ou 2, **caractérisé en ce que** le dispositif d'aide au montage (9) est installé dans le logement de roue (6, 10, 28, 29) de façon élastiquement précontrainte, et de façon à induire une force de tension dans le moyen de transmission sans fin (4).

4. Ensemble d'entraînement pré-assemblé (1) selon l'une quelconque des revendications précédentes, **caractérisé en ce que** le dispositif d'aide au montage (9) est configuré de manière à écarter le moyen de transmission sans fin (4) au niveau du logement de roue (6, 10, 28, 29).

5. Ensemble d'entraînement pré-assemblé (1) selon l'une quelconque des revendications précédentes, **caractérisé en ce que** le dispositif d'aide au montage (9) est configuré de façon à pouvoir être remplacé de façon répétée par une roue d'entraînement (3, 8, 19, 20).

6. Ensemble d'entraînement pré-assemblé (1) selon l'une quelconque des revendications précédentes, **caractérisé en ce que** l'ensemble d'entraînement pré-assemblé (1) est pourvu d'au moins une roue d'entraînement (3, 8, 19, 20), et que le dispositif d'aide au montage (9) est configuré de façon à tirer la roue d'entraînement (3, 8, 19, 20), via le moyen de transmission sans fin (4), vers l'intérieur du logement de roue (6, 10, 28, 29), et de façon à la maintenir en position.

7. Ensemble d'entraînement pré-assemblé (1) selon l'une quelconque des revendications précédentes, **caractérisé en ce que** le dispositif d'aide au montage (9) est formé avec deux branches (15) appuyant élastiquement sur le moyen de transmission sans fin (4).

8. Ensemble d'entraînement pré-assemblé (1) selon la revendication 7, **caractérisé en ce que** les branches (15) sont dirigées au loin du corps de support (2).

9. Ensemble d'entraînement pré-assemblé (1) selon l'une quelconque des revendications 7 ou 8, **caractérisé en ce que** le dispositif d'aide au montage (9) est pourvu d'au moins un élément de manipulation (18) agissant sur les branches (15), et dont l'actionnement permet de comprimer les branches (15) en vue de la dépose du dispositif d'aide au montage (9).

10. Ensemble d'entraînement pré-assemblé (1) selon la revendication 9, **caractérisé en ce que** l'élément de manipulation (18) est librement accessible de l'extérieur de l'ensemble d'entraînement (1).

11. Ensemble d'entraînement pré-assemblé (1) selon la revendication 9 ou 10, **caractérisé en ce que** l'élément de manipulation (18) est aménagé sur les branches (15).

12. Ensemble d'entraînement pré-assemblé (1) selon la revendication 11, **caractérisé en ce que** l'élément de manipulation (18) est réalisé sous forme d'une partie terminale recourbée ou repliée des branches (15).

13. Ensemble d'entraînement pré-assemblé (1) selon l'une quelconque des revendications 7 à 12, **caractérisé en ce que** les branches (15) sont reliées entre elles par l'intermédiaire d'une partie de liaison (16) essentiellement élastique, de préférence courbe.

14. Ensemble d'entraînement pré-assemblé (1) selon la revendication 13, **caractérisé en ce qu'**un dispositif d'aide au montage (9) s'appuie sur le corps de support (2) au niveau de la partie de liaison (16).

15. Ensemble d'entraînement pré-assemblé (1) selon l'une quelconque des revendications précédentes, **caractérisé en ce qu'**à un endroit au moins, le diamètre intérieur (W) du dispositif d'aide au montage (9) correspond au moins au diamètre de la roue d'entraînement (3, 8, 19, 20) qui est appelée à remplacer le dispositif tendeur.

16. Ensemble d'entraînement pré-assemblé (1) selon l'une quelconque des revendications précédentes, **caractérisé en ce que** le dispositif d'aide au montage (9) est fait d'un seul tenant, de préférence en un feuillard.

17. Ensemble d'entraînement pré-assemblé (1) selon l'une quelconque des revendications précédentes, **caractérisé en ce que** le dispositif d'aide au montage (9) est fait en acier ressort.

18. Ensemble d'entraînement pré-assemblé (1) selon l'une quelconque des revendications précédentes, **caractérisé en ce que** le dispositif d'aide au montage (9) présente une largeur (H) qui correspond au moins à la largeur intérieure (B) du moyen de transmission sans fin (4).

19. Ensemble d'entraînement pré-assemblé (1) selon l'une quelconque des revendications précédentes, **caractérisé en ce qu'**un patin de guidage (5) destiné à guider le moyen de transmission sans fin (4) est disposé entre au moins deux des roues d'entraînement (3, 8, 19, 20).

20. Ensemble d'entraînement pré-assemblé (1) selon l'une quelconque des revendications précédentes, **caractérisé en ce qu'**au moins un dispositif tendeur (7, 13, 24) est disposé sur le corps de support, grâce auquel une précontrainte peut être appliquée à l'élément de transmission sans fin (4) entre deux roues d'entraînement (3, 8, 19, 20).

21. Ensemble d'entraînement pré-assemblé (1) selon la revendication 20, **caractérisé en ce que** le dispositif tendeur comporte un patin tendeur (7) monté de façon oscillante sur le corps de support (2).

22. Ensemble d'entraînement pré-assemblé (1) selon la revendication 20 ou 21, **caractérisé en ce que** le dispositif tendeur est précontraint par un dispositif à ressort (23, 24).
